# EUROPEAN PATENT APPLICATION

(11) **EP 2 712 969 A1**
(43) Date of publication of application: **02.04.2014**
(21) Application number: 12785367.9
(22) Date of filing: 13.04.2012
(51) Int. Cl.: E02F 9/26, E02F 9/24

(54) **DEVICE FOR MONITORING AREA AROUND WORKING MACHINE**

(30) Priority: 13.05.2011 JP 2011107815
(71) Applicant: Hitachi Construction Machinery Co., Ltd, Tokyo 112-0004 (JP)
(72) Inventor: ISHIMOTO, Hidefumi, Tsuchiura-shi Ibaraki 300-0013 (JP)
(74) Representative: Beetz & Partner
(86) International application number: PCT/JP2012/060104
(87) International publication number: WO 2012/157379

(57) **Abstract**

[Problem] To provide a display screen image optimal for an operator to monitor the surroundings of an articulated working machine bendable between a front section and a rear section of a vehicle upon acquiring a bird's eye view image of the working machine and displaying it together with an image of the vehicle on a monitor.

[Solution] Upon displaying, on a monitor (12), camera images obtained by cameras (11a-11e) mounted on a vehicle front section (1) and vehicle rear section (2), the vehicle rear section (2) with an operator's cab (8) mounted thereon is displayed as a fixed character image (2C) while the vehicle front section (1) is displayed as a movable character image (1C) bendable relative to the fixed character image (2C). Around a vehicle image (VC) displayed as described above, a composite bird's eye view image, which has been composed from individual bird's eye view images obtained by subjecting the camera images to coordinate transformation such that upper viewpoint images are formed is displayed, so that the individual bird' s eye view images (11A, 11B) acquired from the cameras (11a, 11b) mounted on the vehicle front section (1) are changed in display range when the vehicle front section (1) and vehicle rear section (2) are bent about a pivot pin (10).

## Description

### Technical Field

This invention relates to a surroundings monitoring system for a working machine constructed of an articulated vehicle bendable at a pivotal joint, and the surroundings monitoring system is provided to ensure safety or the like for work by the machine.

### Background Art

In general, self-propelled working machines with vehicle-surroundings monitoring systems arranged thereon to ensure safety for work by the working machine and to provide the working machines with improved operability are conventionally known. A surroundings monitoring system according to a conventional technology is constructed by mounting cameras on a vehicle and arranging a monitor in an operator's cab at a position forward of an operator's seat in which an operator sits. Images captured by the cameras are displayed as screen images in the form of moving pictures on the monitor. From the images on the monitor, a determination can be made as to whether or not any worker or the like is entered into around the vehicle and also as to whether or not there is any structural object, tree or the like around the vehicle.

Incidentally, there is a situation where a sense of distance can hardly be grasped accurately with a simple camera images. Further, a direction may be hardly grasped depending on the situation. When a worker or the like has entered near a working machine or an obstacle such as a structural object exists near the working machine, in other words, when a personnel or material obstacle exists at a position near the working machine, mere watching of a monitor may not permit in some situations an accurate determination, *inter alia,* as to whether or not there is a possibility that the working machine may come at a part thereof to contact with such a personnel or material obstacle, whether or not an escaping action has to be taken, how much action will be needed as the escaping action, or whether or not an escaping is impossible and the operation of the working machine has to be stopped. In some situations, it may hence be impossible to recognize, from a camera image displayed on a monitor, an accurate distance or direction to a personnel or obstacle from a working machine.

When an image is captured by a camera with a field of vision thereof directed in an obliquely downward direction from a certain height and this camera image is subjected to image transformation processing, the camera image can be transformed to an image as viewed from a virtual viewpoint. As such a virtual viewpoint image, an upper viewpoint image with a viewpoint placed at an upper position is transformed to an image in a bird's eye view. Display of this bird' s eye view image on a monitor makes it possible to accurately grasp the distance and direction to a personnel or material obstacle. A system for performing monitoring of the surroundings of a working machine by displaying bird' s eye view images is disclosed, for example, in Patent Document 1. In this Patent Document 1, a monitoring image of surroundings is acquired by cameras mounted at predetermined positions on a rear and left side of a hydraulic excavator as the working machine, directing the optical axes of these cameras obliquely downward to acquire images having wide fields of vision at a rear and lateral side of the hydraulic excavator, subjecting the images to viewpoint transformation to form bird's eye view images as viewed from an upper viewpoint, and displaying the bird' s eye view images on a monitor.

When bird' s eye view images are displayed as described above, the distance and direction from a working machine to a personnel or material obstacle can be accurately grasped. Upon operating the working machine, the safety of its surroundings can, therefore, be confirmed based on a screen image on a monitor.

### Prior Art Document

### Patent Document

Patent Document 1: WO-A-2006/106685

### Disclosure of the Invention

### Problem to Be Solved by the Invention

As self-propelled working machines, self-propelled working machines constructed of articulated vehicles can be mentioned. For example, an articulated wheel loader, articulated dump truck or the like is provided with a pivotal joint about which a front section and rear section of a vehicle are bendable each other. Described specifically, the articulated wheel loader is provided on the vehicle front section with a loader bucket and a drive mechanism therefor, and is provided on the vehicle rear section with an operator's cab and the like. In the case of the articulated dump truck, on the other hand, the vehicle front section serves as an operator' s cab, and a vessel is arranged in the vehicle rear section.

In such an articulated working machine as described above, its vehicle front section and vehicle rear section are bendable relative to each other unlike the hydraulic excavator 1 disclosed in Patent Document 1. Upon acquiring bird's eye view images of the articulated working machine and displaying them on a monitor, there are hence problems to be solved, *inter alia,* as to where is positioned and the manner to show bird's eye view images acquired by the cameras.

With the foregoing in view, the present invention has as an object thereof the provision of a display screen image suitable for an operator to monitor the surroundings of an articulated working machine bendable between a front section and a rear section of a vehicle upon displaying bird's eye view images, which have been transformed from images captured by cameras mounted at various parts of the vehicle, together with an image of the working machine on a monitor.

### Means for Solving the Problem

To achieve the above-mentioned object, the present invention is characterized in that in a surroundings monitoring system for an articulated working machine bendably connected between a vehicle front section and a vehicle rear section with a pivot pin comprising: at least one camera mounted on the vehicle front section, at least one camera mounted on the vehicle rear section and having a field of vision to backward direction of the vehicle, a camera position identifying unit to determine the positions of respective cameras based on an angle of articulation between the vehicle front section and the vehicle rear section about the pivot pin, an image transformation means for converting camera images captured by the cameras to a viewpoint from upward direction for forming bird's eye view images, respectively, an image composing means for converting from the individually acquired bird's eye view images of the respective cameras to a composite bird's eye view image for displaying on the monitor such that the individually acquired bird' s eye view images arranged for positions determined according the position of the corresponding cameras by the camera position identifying unit, and a display image forming means for displaying the composite bird' s eye view image on the display together with a vehicle image in which one of the vehicle front section and the vehicle rear section is set as a fixed-side character image and the other is set as a movable-side character image articulated to the fixed-side character image.

Representative examples of the articulated working machine include wheel loaders and dump trucks. Even to working machines other these wheel loaders and dump trucks, the present invention can also be applied insofar as a vehicle front section and a vehicle rear section are bendably connected to each other, an operator's cab is mounted on one of the vehicle front section and vehicle rear section, and a working means is mounted on the other.

When monitoring the surroundings of the working machine, the monitoring of a backward direction of the vehicle is essential, and moreover, both lateral left and right of the vehicle are also included in areas to be monitored. When the operator's cab is provided on the vehicle front section, a forward field of vision is available for an operator so that a camera with a field of vision directed to a forward of the vehicle is not essentially required. It may, however, be preferable to arrange a forward view camera when the operator' s cab is on the vehicle rear section.

As a mode of display on the monitor, an image of the vehicle of the working machine is formed in a planar format and is positioned at a center of a screen of the monitor, and images of the backward direction and both the lateral leftward and rightward directions, and if necessary, the forward of the vehicle are composed of and displayed on around the image of the vehicle. As the image of the vehicle, it can be an actually-captured image of the vehicle itself. However, a symbolized character image of the vehicle is desired in viewability. As the vehicle front section and vehicle rear section are bendable from side to side relative to each other, one of the vehicle front section and vehicle rear section is set as a fixed-side character image, and the other is set as a movable-side character image bendable relative to the fixed-side character image. As to which vehicle section should be set as the fixed-side character image, a decision is made from the viewpoint of the monitoring of the surroundings. In general, however, it is desired to set, as the fixed-side character image, the vehicle section with the operator's cab mounted thereon. Especially when the operator' s cab is located on the vehicle rear section, it is desired to set the vehicle rear section as the fixed-side character image and to set the vehicle front section as the movable-side character image. When the operator's cab is on the vehicle front section, on the other hand, it is desired in principle to set the vehicle front section as the fixed-side character image. In the case of an articulated dump truck, for example, it may be rather desired to set the vehicle rear section as the fixed-side character image in the event of reverse movement of the vehicle. Therefore, it is also possible to detect a travel operation mode and to display the vehicle front section as the fixed-side character image upon forward movement or the vehicle rear section as the fixed-side character image upon backward movement.

It is advantageous for the monitoring of the surroundings to set a zone, which is dangerous if a personnel or material obstacle such as a human or structural object is located therein, around the vehicle image displayed on the monitor such that the operator is urged to take precautions. For this purpose, a caution range guideline can also be displayed in combination around the vehicle image. In this case, the caution range guideline is configured to also change corresponding to the bent angle of the movable-side character image because the vehicle front section and vehicle rear section are bendable relative to each other.

As the vehicle front section and vehicle rear section are bendable relative to each other, it is necessary to avoid the presence of any blind area in the composite bird' s eye view image displayed on the monitor even when a maximum bending angle is formed between the vehicle front section and the vehicle rear section. For this purpose, the fields of vision of the plural cameras can be set such that the fields of vision of at least adjacent two of the cameras overlap partly. It is also possible to set such that, at a place where the fields of vision of the cameras overlap, one of the images is displayed and the other image is not displayed at the overlapping place.

### Advantageous Effects of the Invention

Upon creating bird's eye view images from images captured by cameras arranged at various parts of an articulated working machine bendable between a front section and a rear section of a vehicle and displaying them on a monitor, a display screen image optimal for an operator to monitor the surroundings of the working machine can be displayed on the monitor by displaying the vehicle front section and vehicle rear section, which are in a bendable relationship, as a vehicle image of an actual bent posture and also displaying, together with the vehicle image, a composite bird' s eye view image composed such that the bird' s eye view images acquired from the respective camera images correspond to the positions of the cameras.

### Brief Description of the Drawings

FIG. 1 is a front view of an articulated wheel loader as an example of an articulated working machine.
FIG. 2 is a plan view of FIG. 1.
FIG. 3 is an illustrative diagram showing the principle of transformation of a camera image to a bird's eye view image.
FIGS. 4A and 4B are illustrative diagrams showing a camera image and a bird's eye view image transformed from the camera image.
FIG. 5 is an illustrative diagram showing an image displayed on a monitor of the articulated wheel loader.
FIG. 6 is a plan view of the articulated wheel loader, and shows a vehicle front section and a vehicle rear section in a bent state.
FIG. 7 is an illustrative diagram showing an image displayed on the monitor of the articulated wheel loader, in which the articulated wheel loader is in the bent state of FIG. 6.
FIG. 8 is an illustrative diagram showing a coordinate system set for the articulated wheel loader in the bent state.
FIG. 9 is an illustrative diagram showing fields of vision before synthesis of individual bird' s eye view images of the articulated wheel loader in a non-bent state.
FIG. 10 is an illustrative diagram showing fields of vision before synthesis of individual bird' s eye view images of the articulated wheel loader in a bent state.
FIG. 11 is a block diagram depicting the construction of a controller for displaying a vehicle image and a composite bird's eye view image on the monitor.
FIG. 12 is a front view of an articulated dump truck as another example of an articulated working machine.
FIG. 13 is a plan view of FIG. 12.
FIG. 14 is a plan view of the articulated dump truck, and shows a vehicle front section and a vehicle rear section in a bent state.
FIG. 15 is an illustrative view showing a display on a monitor upon reverse movement of the articulated dump truck in the bent posture of FIG. 14.

### Modes for Carrying out the Invention

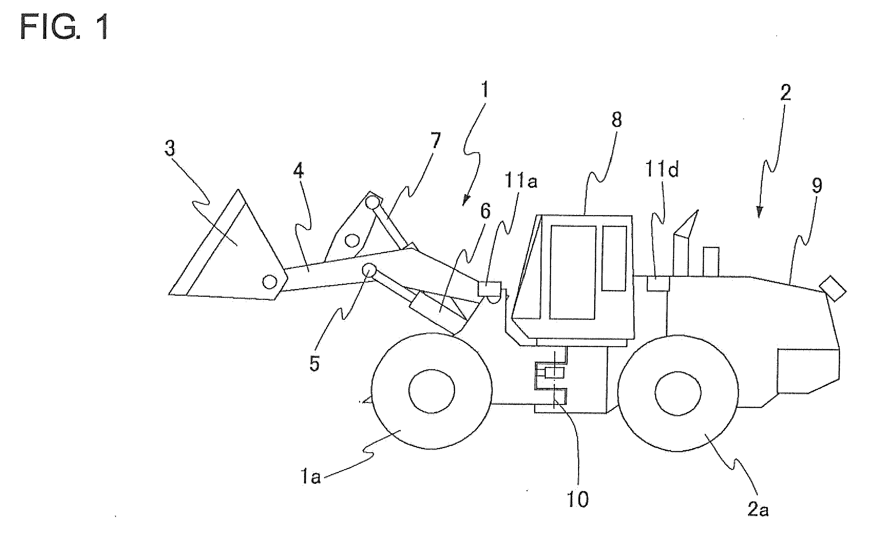

Embodiments of the present invention will hereinafter be described based on the drawings. First, the construction of an articulatedwheel loader as an example of an articulated working machine is shown in FIGS. 1 to 3.

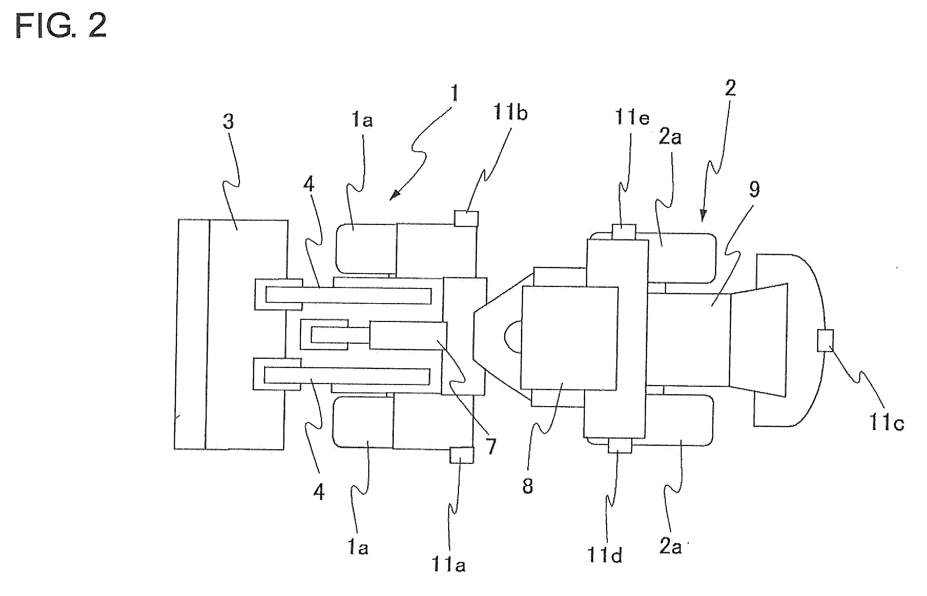

In FIGS. 1 and 2, numeral 1 designates a vehicle front section, and numeral 2 designates a vehicle rear section. The vehicle front section 1 has wheels 1a, and on its front part, a loader bucket 3 is mounted as a working means. This loader bucket 3 is connected to free ends of arms 4 via connecting pins 5, and is tiltable by a bucket cylinder 6 in an up-and-down direction about the connecting pins 5. Arm cylinders 7 are connected to the arms 4, and upon actuation of the arm cylinders 7, the loader bucket 3 moves up or down. The vehicle rear section 2 has wheels 2a, and on the vehicle rear section 2, an operator's cab 8 equipped internally with an operator' s seat and various control means is arranged. At a position behind the operator's cab 8, an engine and pump compartment 9 is arranged with an engine and mechanical equipment such as hydraulic pumps accommodated therein.

These vehicle front section 1 and vehicle rear section 2 are connected to each other via a pivot pin 10 so that about the pivot pin 10, the vehicle front section 1 and vehicle rear section 2 are pivotal relative to each other in a horizontal direction. A steering wheel (not shown) is arranged as a control means in the operator's cab 8. By operating this steering wheel, the vehicle front section 1 and vehicle rear section 2 are pivoted about the pivot pin 10 to an extent corresponding to its steering angle.

Plural cameras are mounted on the articulated wheel loader to monitor its surroundings. One example of a mounting layout of such plural cameras is shown in FIG. 2. In the diagrammatically shown example, a left front-section camera 11a and a right front-section camera 11b are mounted on both a left side position and right side position of the vehicle front section 1 at rear positions of the vehicle front section 1. On the vehicle rear section 2, on the other hand, a rear view camera 11c, a left rear-section camera 11d and a right rear-section camera 11e are mounted. These cameras 11a-11e are all mounted on the corresponding bodies, and their fields of vision are directed obliquely downward. Camera pictures captured by the cameras 11a-11e are transformed to bird' s eye view images ranging over angles of view of the cameras 11a-11e.

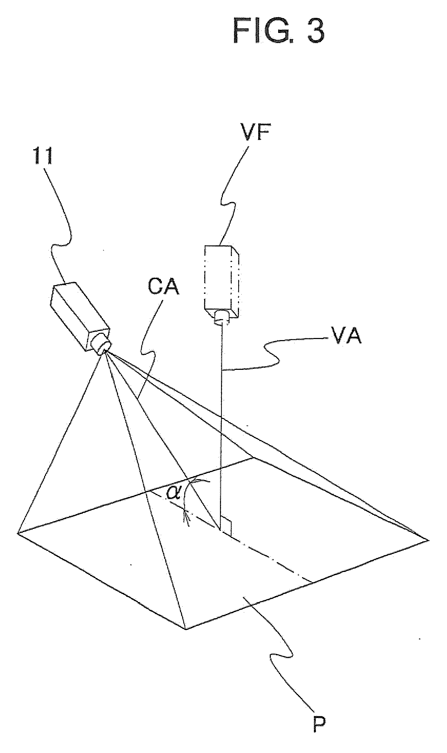

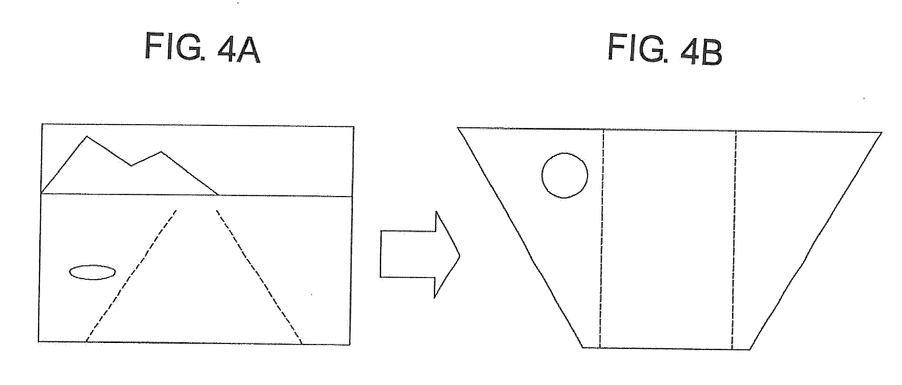

Described specifically, as shown in FIG. 3, when each camera 11 is arranged at a predetermined height position and captures with the optical axis CA of its object glass directed obliquely downward at an angle α, a camera image P is obtained. From the camera image P having this angle θ, a coordinate-transformed image is formed such that as shown by an imaginary line in the figure, an optical axis VA extends from a virtual viewpoint VF at right angles relative to the camera image P. In this manner, each camera image captured from an obliquely upper viewpoint of an angle α can be transformed to a bird's eye view image. When a camera image (an image after image corrections such as distortion correction have been performed) shown, for example, in FIG. 4A is subjected to coordinate transformation, a bird' s eye view image such as that shown in FIG. 4B is obtained.

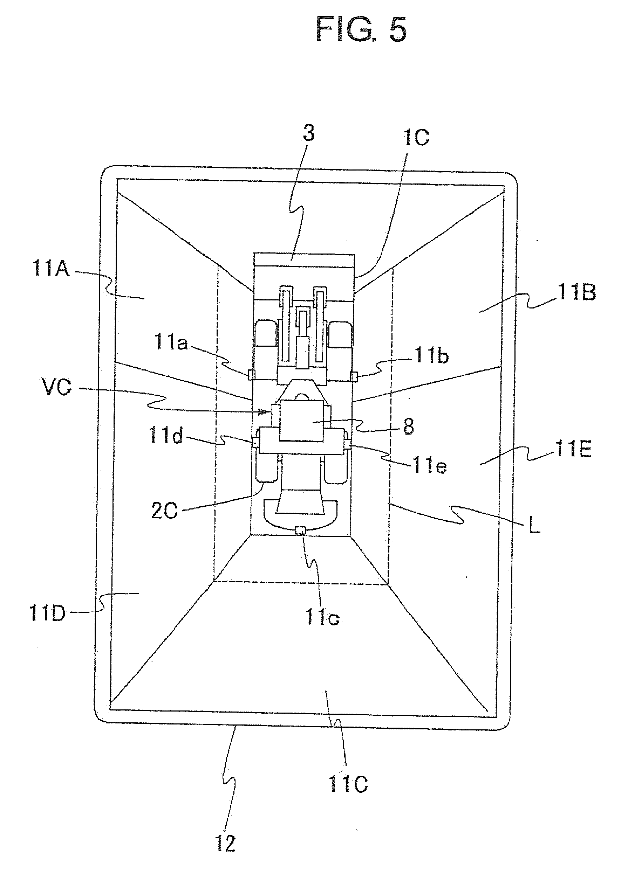

Bird's eye view images which have been transformed as described above are displayed, together with a vehicle image of the articulated wheel loader, on a monitor 12 arranged in the operator's cab 8. One example of a display on the monitor 12 is shown in FIG. 5. In this figure, there are shown a character image 1C of the front section as obtained by characterizing a body image of the vehicle front section 1 and a character image 2C of the rear section as obtained by characterizing a body image of the vehicle rear section 1. A vehicle image VC is formed by these character images. Designated at signs 11A-11E are the individual bird's eye view images obtained by subjecting the camera images, which have been acquired by the respective cameras 11a-11e, to the coordinate transformation. The individual bird's eye view images are displayed, as a composite bird's eye view image composed from them, together with the vehicle image on the monitor 12. In the figure, letter L designates a caution range guideline set around the vehicle image VC, and this caution range guideline L indicates a boundary of a zone set to be dangerous if a personnel or material obstacle such as a human or structural object is located inside.

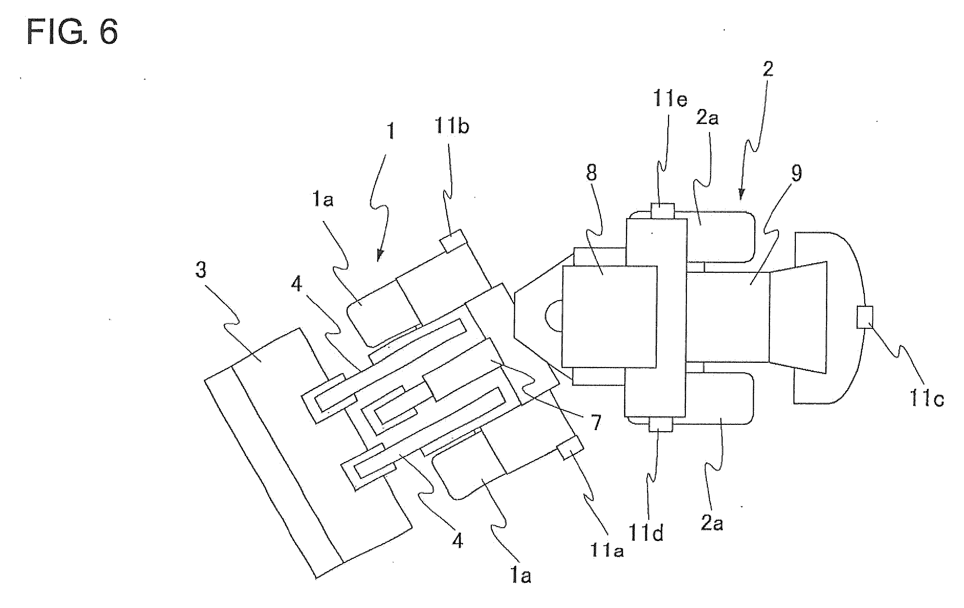

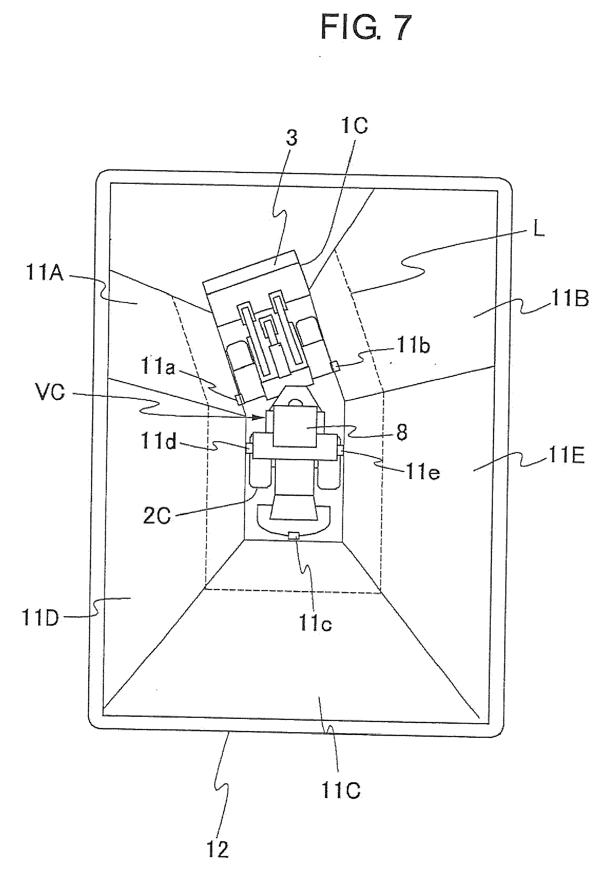

Incidentally, the vehicle front section 12 and the vehicle rear section 2 are connected to each other via the pivot pin 10 in the articulated wheel loader (see FIG. 1), and as shown in FIG. 6, the vehicle front section 1 and the vehicle rear section 2 are bendable relative to each other from side to side about the pivot pin 10. When the articulated wheel loader takes a bent posture during traveling of the vehicle or working, the display of the vehicle image on the monitor 12 is correspondingly brought to the bent state shown in FIG. 7.

As the operator's cab 8 is located on the side of the vehicle rear section 2 in the articulated wheel loader, the vehicle rear section 2 is displayed on the monitor 12 as the fixed-side character image 2C fixed at a predetermined position, and the vehicle front section 1 is displayed on the monitor 12 as the movable-side character image 1C bendable relative to the fixed-side character image 2C. Of the individual bird's eye view images 11A-11E, the individual bird's eye view images 11C-11E based on the cameras 11c,11d,11e mounted on the vehicle rear section 2 are fixedly displayed, and the individual bird' s eye view images 11A,11B based on the cameras 11a,11b mounted on the vehicle front section 1 are displayed such that they are movable corresponding to the angle of articulation.

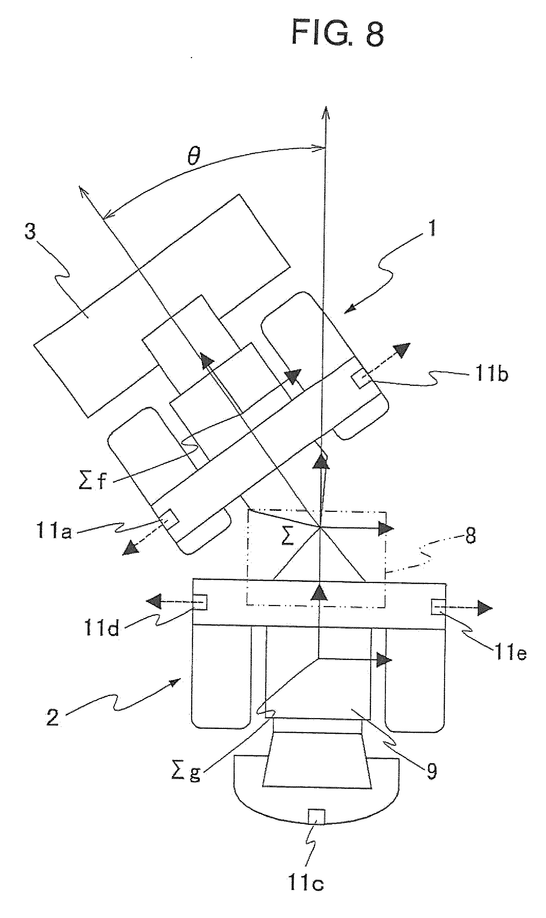

For the above-mentioned purpose, a coordinate system is set as ∑ around the pivot axis 10 between the vehicle rear section 2 and the vehicle front section 1, and coordinate systems for the vehicle front section 1 and vehicle rear section 2 are also set as ∑f,∑g, all on the screen of the monitor, as shown in FIG. 8. It is to be noted that the coordinate axis ∑g of the vehicle rear section 2 is fixed because the vehicle rear section 2 is displayed as the fixed-side character image 2C. When a steering operation is performed over an angle θ, the angle between the vehicle front section 1 and the vehicle rear section 2 changes. In other words, the coordinate system ∑ and coordinate system ∑f rotate over the steering angle θ. Upon displaying the vehicle image VC on the monitor 12, the vehicle image VC shown in the bent state in FIG. 7 is formed based on the dimensions and steering angle θ upon displaying the vehicle front section 1 and vehicle rear section 2, and is displayed together with the composite bird's eye view image on the monitor 12.

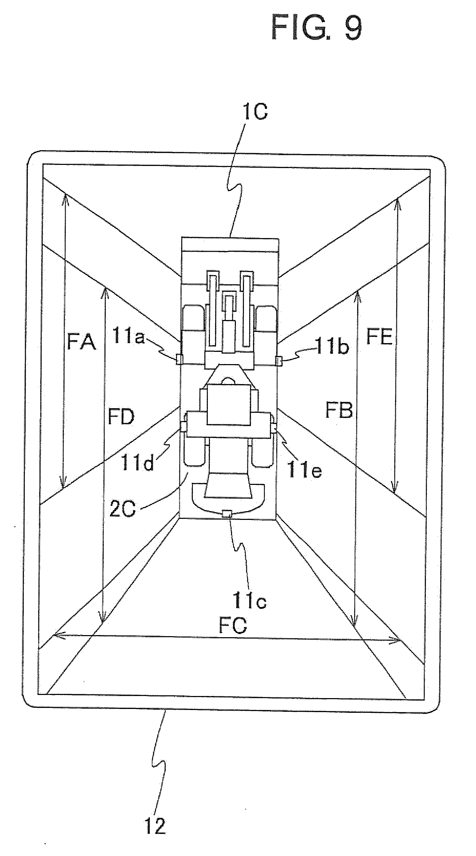

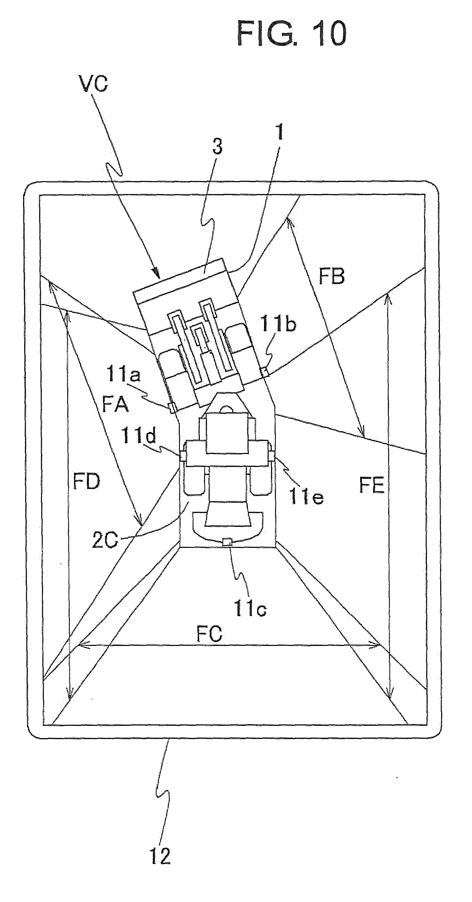

When the articulated wheel loader constructed of the vehicle front section 1 and vehicle rear section 2 with the cameras 11a-11e mounted thereon are displayed on the monitor 12, the cameras 11a-11e are set in position and angle of view such that the individual bird' s eye view images 11A-11E are made sure to partly overlap. This means that these cameras are set similarly in position and angle of view irrespective of whether the articulated wheel loader is in the non-bent state shown in FIG. 9 or in a maximally bent state when the articulated wheel loader has been brought into the bent state shown in FIG. 10. In FIGS. 9 and 10, actual view field ranges of respective individual bird's eye view images 11A-11E are indicated by FA-FE. To form a composite bird's eye view image, image signals are processed as will be descried hereafter. At overlapping portions of each two adjacent ones of the individual bird's eye view images, one of the images is used in preference to the other and the other image is processed to bring it to a partly non-displayed state.

On the monitor 12, the vehicle rear section 2 is displayed as the fixed-side character image 2C while the vehicle front section 1 is displayed as the movable-side character image 1C. In this embodiment, the display area on the monitor 12 is, therefore, set such that the respective display areas of the individual bird's eye view images 11C-11E on the side of the fixed-side character image 2C are fixed and the respective display areas of the individual bird's eye view images 11A, 11B on the side of the movable-side character image 1C are changeable. Now, assuming that steering is performed from the non-bent state of FIG. 9 toward the bent state of FIG. 10, the composite bird's eye view image changes from the state shown in FIG. 5 such that as shown in FIG. 7, the display area of the individual bird' s eye view image 11A on the left side decreases while the display area of the individual bird's eye view image 11B on the right side increases. As a consequence, a monitoring image is displayed all around the articulated wheel loader except for a forward field of vision, where visual recognition is feasible for an operator, irrespective of whether or not the articulated wheel loader is bent.

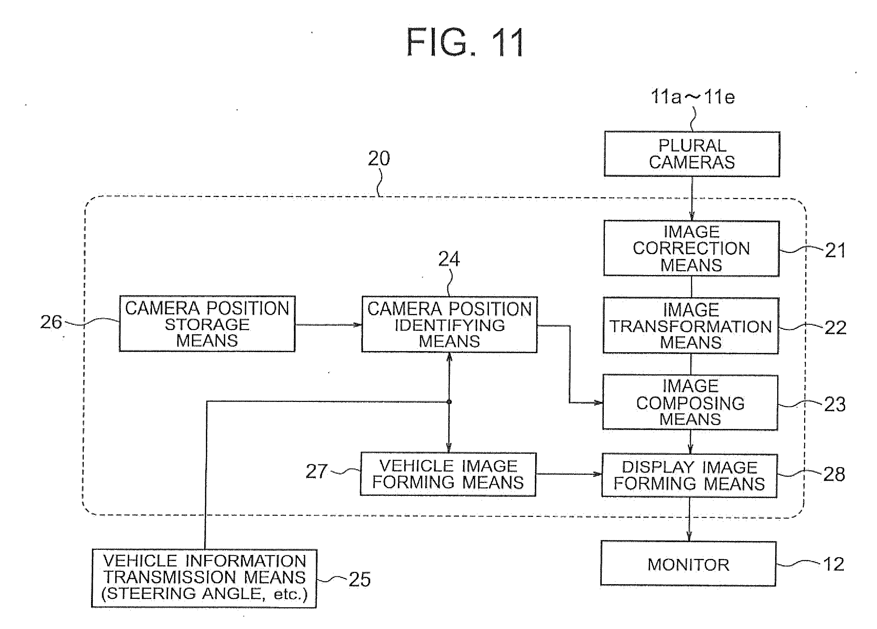

To display the vehicle image VC and composite bird's eye view image in combination on the monitor 12 as described above, a controller 20 of the circuit configuration depicted in FIG. 11 is arranged. Camera image signals acquired by the cameras 11a-11e are inputted to the controller 20, where these camera image signals are subjected to image corrections such as distortion correction as needed by an image correction means 21. An image transformation means 22 is connected to the image correction means 21, and by this image transformation means 22, the individual camera image signals are coordinate-transformed to bird' s eye view image signals such that the respective optical axes extend at right angles.

The individual bird's eye view images 11A-11E are formed as described above, and signal processing is performed by an image composing means 23 such that these individual bird's eye view images 11A-11E are displayed at their corresponding display areas. As the articulated wheel loader is bendable between the vehicle front section 1 and the vehicle rear section 2, the display areas for the individual bird's eye view images 11A-11E are allotted based on the positions of the individual cameras 11a-11e and the posture state of the articulated wheel loader. For this purpose, the controller 20 is provided with a camera position identifyingmeans 24. Information on the steering angle θ is inputted to the controller 20 via a transmission means 25 for information on the body of the articulated wheel loader (hereinafter called "the vehicle information transmission means 25"), and is then inputted to the camera position identifying means 24. The controller is also configured to obtain, from a camera position storage means 26, information on the positions of the individual cameras 11a-11e at the time of the non-bent state. When displaying on the monitor 12, the display areas to be allotted to the individual bird's eye view images 11A-11E are determined based on the origin points of the individual cameras 11a-11e and the angle of articulation between the vehicle front section 1 and the vehicle rear section 2, whereby the composite bird's eye view image is formed.

As the relative positional relationship between the front character image 1C of the vehicle front section 1 and the rear character image 2C of the vehicle rear section 2 changes through bending on the monitor 12, the angle of bending between the vehicle front section 1 and the vehicle rear section 2 as obtained based on the information concerning the steering angle from the vehicle information transmission means 25 is inputted in a vehicle image creation means 27 upon displaying the vehicle image VC on the monitor 12, whereby the vehicle image VC is formed. The above-mentioned composite bird' s eye view image and vehicle image VC are then inputted to a display image creation means 28, and based on image signals transmitted from the display image creation means 28, a monitoring image of the surroundings is displayed on the monitor 12.

As has been described above, when the operator performs machine operations in the operator's cab on the vehicle rear section 2 of the articulated wheel loader, the operator can confirm, by watching the monitor 12 especially during traveling, whether or not there is any personnel or material obstacle such as a human or structural object in the surroundings. Owing to the display of the composite bird' s eye view image around the vehicle image VC and the additional display of the caution range guideline L over the composite bird's eye view image, the operator can accurately grasp the direction and distance to such a personnel or material obstacle by watching the monitor 12, thereby making it possible to achieve assurance of work safety, an improvement in work efficiency, and the like.

As the wheel loader is articulated and the vehicle front section 1 and the vehicle rear section 2 are bendably connected to each other, it is necessary to have this bent state reflected to the display on the monitor 12. The operator is located in the operator's cab 8 on the vehicle rear section 2, and the working mechanism is arranged on the vehicle front section 1. Therefore, the vehicle front section 1 and the loader bucket 3, which makes up the working mechanism, are visible from the inside of the operator's cab 8. Without watching the monitor 12 in particular, forward movements of the vehicle and work to be performed by driving the working mechanism can hence be performed safely and efficiently.

Upon bending operation or reverse movement of the articulated wheel loader or when a worker or the like is moving in a direction approaching the vehicle, on the other hand, it is necessary to confirm the safety of the rear and lateral sides. Because the vehicle rear section 2, where the operator's cab 8 in which the operator is performing operation is arranged, is displayed as the fixed-side character image 2C at this time, it is possible to smoothly conduct the confirmation of the safety of the rear upon reverse movement of the vehicle or the confirmation of the safety of the surroundings upon bending operation of the vehicle. Therefore, the operator can adequately grasp the situation, and has no sense of uncertainty in watching the monitor 12.

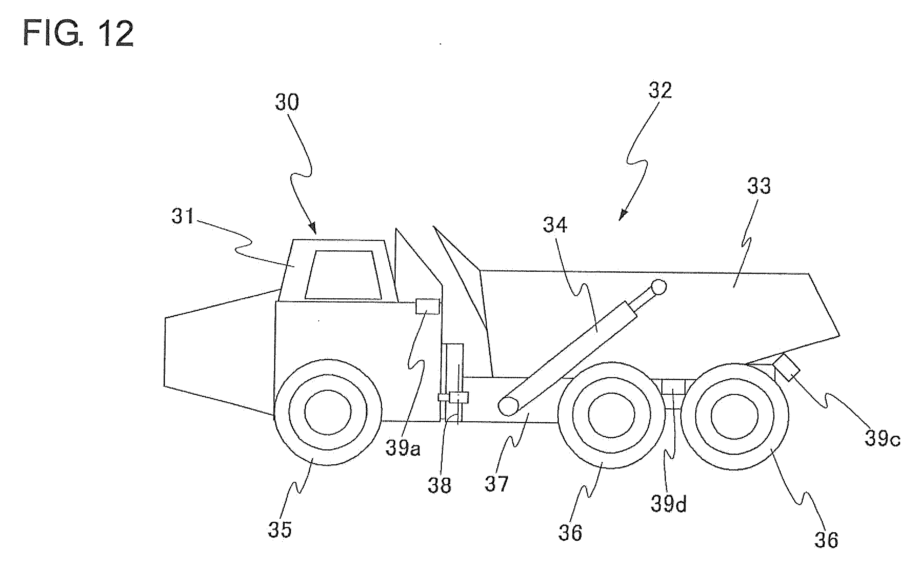

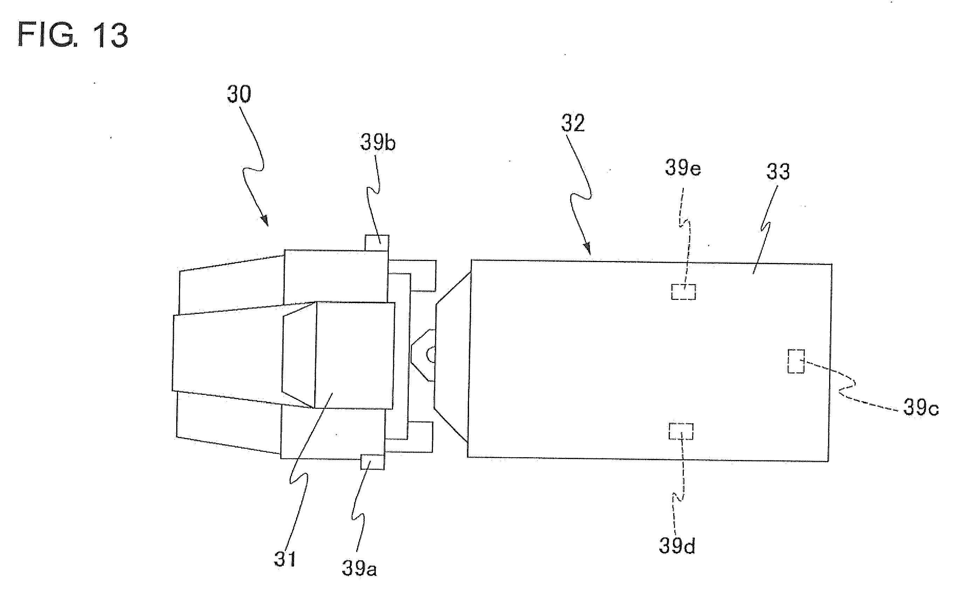

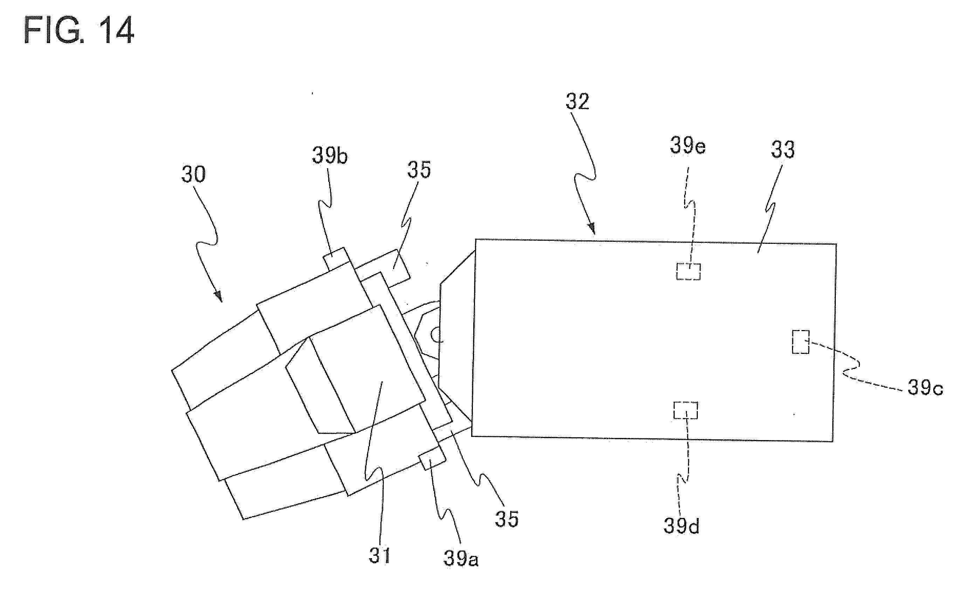

Next, a front view and a plan view of an articulated dump truck as another example of the articulated working machine are shown in FIG. 12 and FIG. 13, respectively. Further, FIG. 14 is a plan view of the articulated dump truck in a bent state.

As is evident from these figures, a vehicle front section 30 includes an operator's cab 31, and a vessel 33 is arranged in a vehicle rear section 32. The vessel 33 is able to tilt rear-ward by hydraulic cylinders 34. The vehicle front section 30 is provided with a pair of wheels 35, while the vehicle rear section 32 is provided with two pairs of wheels 36. The vehicle front section 30 and a frame 37, which makes up the vehicle rear section 32, are connected to each other via a pivot pin 38, so that the articulated dump truck is displaceable to the non-bent state shown in FIG. 13 and also to the bent state shown in FIG. 14.

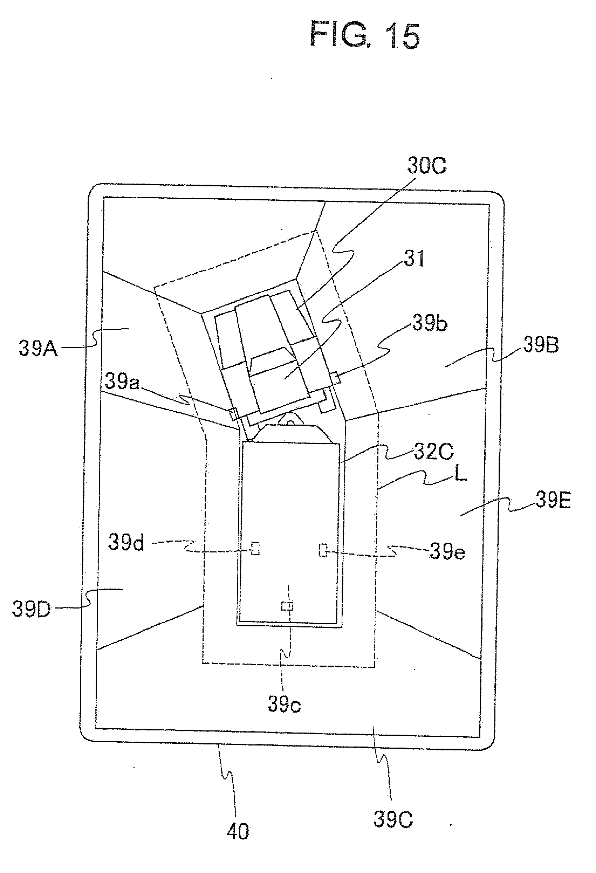

Cameras 39a,39b are mounted on left and right side portions of the front vehicle section 30 at positions near a connecting part to the vehicle rear section 32 via the pivot pin 38. With respect to the vehicle rear section 32, cameras 39c,39d,39e are also mounted at a position on a rear part of the frame 37 and at left and right side positions between the front and rear wheels 36, 36, respectively. As in the above-described first embodiment, camera images captured by these individual cameras 39a-39e are subjected to coordinate transformation such that upper viewpoint images are formed, whereby individual bird' s eye view images 39A-39E are obtained. A composite bird's eye view image formed by composed of individual bird's eye view images 39A-39E is displayed together with a vehicle image of the articulated dump truck on a monitor 40 as shown in FIG. 15. It is to be noted that the articulated dump truck is shown in a bent state in FIG. 15.

As to which one of the mutually-bendable vehicle front section 30 and vehicle rear section 32 should be displayed as a fixed-side character image on the monitor 40, in other words, which one of them shouldbe displayed as a movable-side character image there, the vehicle front section 30 and vehicle rear section 32 are displayed as the fixed-side character image and movable-side character image, respectively, when the operator' s cab 31 is used as a basis. It is, however, possible to configure such that the vehicle rear section 32 is displayed as the fixed-side character image on the monitor 40 at the time of reverse movement, because the vehicle rear section 32 is longer than the vehicle front section 30, and moreover, no rear field of vision can be practically obtained from the operator's cab 31. In FIG. 15, the vehicle rear section 32 is shown as a fixed-side character image 32c, while the vehicle front section 30 is shown as a movable-side character image 30C.

When the articulated dump truck moves backward direction, the movement takes place toward a rear position of the vehicle rear section 32 irrespective of whether the articulated dump truck is in a bent state or in a non-bent state. By fixedly displaying the rear position of the vehicle rear section 32, it is thus possible to accurately perform, in a rear field of vision, the confirmation as to whether or not a personnel or material obstacle such as a human or structural object exists. Upon forward movement of the articulated dump truck, however, it is desired to display the vehicle front section 30, on which the operator' s cab 31 is mounted, as the fixed-side character image. The fixed-side character image may, therefore, be changed between forward movement and backward movement of the articulated dump truck, in other words, depending on the travel operation mode. As depicted in FIG. 11, the vehicle information transmission means 25 is connected to the vehicle image creation means 27 and camera position identifying means 24, and from this vehicle information transmission means 25, not only information on a steering angle but also various other information can be acquired. It is, accordingly, possible to obtain, from the vehicle information transmission means 25, information as to whether the vehicle is moving forward or reverse and then to change the display mode of the monitor 40 based on a signal representing this information.

### Legend

- 1, 30: Vehicle front section
- 2, 32: Vehicle rear section
- 3: Loader bucket
- 8: Operator's cab
- 10, 38: Pivot pin
- 11a-11e, 39a-39e: Camera
- 12, 40: Monitor
- 20: Controller
- 21: Image correction means
- 22: Image transformation means
- 23: image composing means
- 24: Camera position identifying means
- 25: Vehicle information transmission means
- 27: Vehicle image composing means
- 28: Display image composing means
- 33: Vessel
- 1C,2C,30C,32C: Character image
- 11A-11E,39A-39E: Individual bird's eye view image

## Claims

1. A surroundings monitoring system for an articulated working machine bendably connected between a vehicle front section and a vehicle rear section with a pivot pin comprising:
at least one camera mounted on the vehicle front section,
at least one camera mounted on the vehicle rear section and having a field of vision to backward direction of the vehicle,
a monitor to show image for monitoring around the working machine,
a camera position identifying unit to determine the positions of respective cameras based on an angle of articulation between the vehicle front section and the vehicle rear section about the pivot pin,
an image transformation means for converting camera images captured by the cameras to a viewpoint from upward direction for forming bird's eye view images, respectively,
an image composing means for converting from the individually acquired bird's eye view images of the respective cameras to a composite bird's eye view image for displaying on the monitor such that the individually acquired bird's eye view images arranged for positions determined according the position of the corresponding cameras by the camera position identifying unit, and
a display image forming means for displaying the composite bird's eye view image on the display together with a vehicle image in which one of the vehicle front section and the vehicle rear section is set as a fixed-side character image and the other is set as a movable-side character image articulated to the fixed-side character image.

2. The surroundings monitoring system according to claim 1, wherein the section provided with an operator's cab is displayed as the fixed-side character image on the monitor.

3. The surroundings monitoring system according to claim 1, wherein the working machine is provided on the vehicle front section thereof with an operator' s cab, and the display screen image is changed the fixed-side character image between the vehicle front section on forward movement of the working machine and the vehicle rear section on backward movement of the working machine.

4. The surroundings monitoring system according to any one of claims 1-3, wherein a caution range guideline around the vehicle image is shown on the monitor, the caution range guideline is changed based upon a change in the articulation angle with a degree according to the changing angle.

5. The surroundings monitoring system according to any one of claims 1-3, wherein the respective cameras on the vehicle front section and vehicle rear section are arranged at positions such that at least two of the adjacent cameras partly is overlapped in field of vision over an entire articulate angle.
